Europäisches Patentamt

**European Patent Office**

**Office européen des brevets**

(11) Publication number: **0 016 559**
A1

## (12) EUROPEAN PATENT APPLICATION

(21) Application number: **80300580.0**

(22) Date of filing: **27.02.80**

(51) Int. Cl.³: **H 02 J 7/14**
**H 02 J 7/16, B 60 R 16/02**

(30) Priority: **02.03.79 GB 7907480**

(43) Date of publication of application:
**01.10.80 Bulletin 80/20**

(84) Designated Contracting States:
**AT BE CH DE FR GB IT LU NL SE**

(71) Applicant: **Caspersz, Gavin Helbsy**
**46, Bierton Road**
**Aylesbury Buckinghamshire(GB)**

(72) Inventor: **Caspersz, Gavin Helbsy**
**46, Bierton Road**
**Aylesbury Buckinghamshire(GB)**

(74) Representative: **Grundy, Derek George Ritchie et al,**
**CARPMAELS & RANSFORD 43, Bloomsbury Square**
**London WC1A 2RA(GB)**

(54) Electrical generating apparatus and method.

(57) The invention relates to an electrical generating apparatus and method. The apparatus comprises a polyphase alternator (1,2) an internal combustion engine connected to drive the alternator (1,2). A step up polyphase transformer (7) having its number of phases corresponding to the number of phases of the alternator (1,2) is provided, and each phase of the transformer (7) is connected to a phase output of the alternator (1,2). The output of the transformer (7) is higher than that of the polyphase alternator (1,2). The output of the transformer (7) is rectified to provide a DC output which DC output may optionally be inverted.

EP 0 016 559 A1

./...

An electrical generating apparatus and method

The present invention relates to an electrical generating apparatus and method for obtaining an electrical supply from the output of a polyphase alternator, driven by an internal combustion engine.

It is often desirable to run mains voltage appliances such as power tools or powerful lighting when a mains voltage supply is not available, e.g. in cars or boats or on building sites. Invariably, unless a mains generator is available which is costly, and bulky the only electrical supply present is of a low voltage, e.g. the 6, 12 or 24 volt electrics of motor vehicles such as cars, boats or building equipment such as cranes, compressors or bulldozers.

It has been attempted to provide a system for obtaining a mains voltage supply from 12 volt lead acid batteries by inverting the DC voltage to provide 12 volts AC and then transforming this AC voltage to mains voltage, but only low power consuming mains voltage appliances can be run in this manner unless expensive circuitry is used. Furthermore the inverter circuit is easily damaged if it is attempted to run too high a power consuming appliance or if a short circuit occurs. Accordingly the addition of protective circuits are necessary which adds considerably to cost.

It is also known to use a rotary converter for obtaining a mains voltage supply from a 12 volt battery but it is not an efficient system.

In both these known systems, the running of mains appliances off 12 volt batteries soon discharges the batteries, and the batteries must be continually charged e.g. by the alternator of a car, boat or building equipment engine, if any lower power consuming mains appliances are to be run for any length of time. Furthermore, the amount of power available for the appliance is extremely low compared to the power provided by the alternator i.e. such systems are inefficient.

The present invention seeks to provide an apparatus and method for obtaining an electrical supply which is particularly suitable for enabling the running of high power consuming mains voltage appliances than has previously been possible from low voltage supplying alternators driven by internal combustion engines such as are present in land vehicles, boats and building equipment. Indeed the present invention is useful where a high voltage source is required in the absence of a mains voltage supply, and the only electrical source available is from an alternator driven by an internal combustion engine.

In general most alternators driven by internal combustion engines are of the polyphase type e.g. three phases. The relatively high power output obtained with the present invention compared with the known systems discussed above is obtained by the particular use of all the phases of the alternator.

The present invention provides an eletrical generating apparatus comprising a polyphase alternator, an internal combustion engine connected to drive said alternator, a step up polyphase transformer having its number of phases corresponding to the number of phases of the alternator and each phase of the transformer being connected to a phase output of the alternator whereby, in use, said transformer output voltage is higher than that of the alternator, and a rectifier connected to the output of the polyphase transformer to provide a DC output.

According to the present invention there is also provided a method for obtaining an electrical supply from the output of a polyphase alternator driven by an internal combustion engine wherein the voltage of said electrical supply is higher than that of the output of the polyphase alternator comprising providing a step up polyphase transformer having its number of phases corresponding to the number of phases of the alternator, and connecting each phase input of the transformer to a phase output of the alternator, and rectifying the output of the polyphase transformer to provide a DC output.

It has been found that most mains appliances, e.g. power tools and lighting, work very satisfactorily off a DC supply, and indeed a DC supply is often more efficient. It is envisaged however that some mains appliances will require an AC supply at a particular frequency, e.g. 50 hertz, and therefore the DC output can be fed into an inverter circuit, known per se, to provide the required AC voltage and frequency.

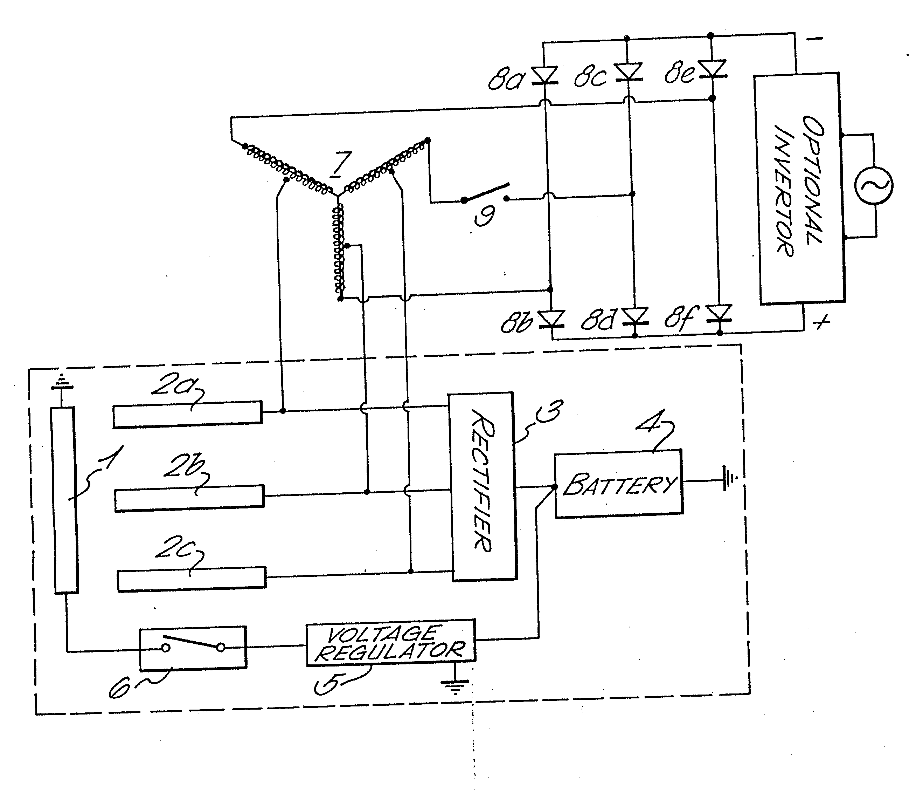

A preferred embodiment of the present invention will now be described with reference to the accompanying figure.

Referring to the figure, there is shown generally indicated with the dotted square a schematic representation of an electrical system such as is normally present in an automobile. The system comprises an alternator which is driven by an internal combustion engine (not shown) and has a field winding 1 and three stator windings 2a, 2b and 2c. The output from the stator windings provides a three phase power source which is rectified by a rectifier 3 which in turn provide a DC output to charge a battery 4. The field winding 1 is excited by the battery 4 through a voltage regulator 5, which voltage regulator 5 maintains the output from the stator windings constant. An automatic cut-out 6 is provided to isolate the field winding from the electric supply when the load on the output of the stator windings 2a, 2b and 2c exceeds a predetermined value.

In accordance with the invention, the three AC outputs 2a, 2b and 2c from the stator windings of the 3-phase alternator are connected to the input of a 3-phase/step up transformer 7. The three AC outputs of each phase of the transformer are respectively connected to a rectifier comprising three groups of diodes 8a, 8b, 8c, 8d, 8e and, 8f thereby providing a DC output. The output voltage across any two phases of the alternator may typically be 14 volts for a 12 volt electrical system of a car and the windings of the transformer are so selected to provide the required DC voltage, e.g. 240 volts or 110 volts. If an AC voltage is required, a DC output of the rectifier can be connected to an inverter known in the art to provide an AC voltage/at any required frequency.

- 4 -

As shown in the drawings, most alternators driven by internal combustion engines have a protective temporary cut-out device 6 when overloaded. Accordingly, when the invention is used with such alternators, the alternator will cut out should a short circuit occur or an overload occur across the output of the rectifier or, if used, the invertor, so no additional protective circuitry is required.

Many electrical appliances when running will consume insufficient power to trip the cut-out device 6, but when such appliances are first switched on a current surge may be created which will trip cut-out device 6. For example a 500 w. drill when running may not trip the cut-out device 6, but may trip cut-out device 6 when started. When the invention is used with appliances which will normally run but will not start without tripping cut-out device 6, a switch 9 may be incorporated into the circuit. Before switching on such an appliance, switch 9 is used to disconnect one phase of the output from transformer 7 from the rectifier of diodes 8a to 8f so that the voltage across the output of the rectifier is temporarily reduced. As the voltage is reduced more current can be drawn when the appliance is initially switched on without tripping cut-out device 6. Once the appliance is on and the initial current surge is reduced, switch 9 can be closed to bring the voltage up to the required level. Switch 9 may be an automatic or manual switch.

Furthermore, as shown in the drawings, most alternators driven by internal combustion engines contain a voltage regulator. When the invention is used with such alternators, the DC output voltage is regulated without the need for additional voltage regulators.

It is envisaged that a housing comprising a preconnected transformer and rectifier, and optionally an invertor and/or switch 9, could be sold with the necessary wires leading therefrom for the purchaser to fit to the output windings of the alternator. Different transformers could be used to match different types of alternators and to provide a variety of output voltages. Alternatively each transformer could be manufactured with a variety of tappings, so that the output voltage can be varied and/or so that the transformer could be used with different types of alternators generating different voltages.

Other types of transformer arrangements could of course be used, such as three separate transformers in place of the/ single transformer shown.

A further safety factor occurs since the output voltage is not earthed to ground. Accordingly a user of an appliance connected to the output of the rectifier or, if used, invertor, would have to be connected across both output terminals to receive an electric shock.

It has been found that when the invention is used with alternators fitted to average sized cars, up to 500 watts of power can be derived from the alternator, and the standard electrical appliances of the car, e.g. headlights and fans, will still function normally. The electrical appliances such as used in cars and boats, e.g. fans, lights, and windscreen wipers, could be replaced by high voltage appliances with the use of the invention. This would avoid the tiresome problem of bad connections in cars and boats which are inevitable with low voltage systems especially when damp.

The invention might also be used as a standard feature in vehicles such as police cars and ambulances so as to power flood lighting at scenes of accidents, or to power electrical equipment in outside broadcast vehicles.

The invention may also be particularly useful if incorporated into farming vehicles, e.g. to supply lighting in order that farming, such as harvesting, can be carried out at night.

- 6 -

CLAIMS:

1. An electrical generating apparatus comprising a polyphase alternator, an internal combustion engine connected to drive said alternator, a step up polyphase transformer having its number of phases corresponding to the number of phases of the alternator and each phase of the transformer being connected to a phase output of the alternator whereby, in use, said transformer output voltage is higher than that of the alternator, and a rectifier connected to the output of the polyphase transformer to provide a DC output.

2. An electrical generating apparatus according to claim 1 further comprising an invertor connected to said rectifier to provide an AC electrical supply.

3. An electrical generating apparatus according to claim 1 or 2, wherein the output of said alternator is additionally connected to a rectifier, which rectifier is further connected to a battery whereby said alternator charges said battery.

4. An electrical generating apparatus according to claim 3, wherein said alternator has a field winding which is connected to and excited by said battery, said apparatus further comprising a voltage regulator for maintaining the output of said alternator constant whereby said DC output is of substantially constant voltage.

5. An electrical generating apparatus according to claim 3 or 4, further comprising an overload cutout, said alternator having a field winding excited by said battery and controlled by said cutout, whereby said cutout disconnects said field winding in response to excess load across the output of the alternator.

6. An electrical generating apparatus according to any preceding claim wherein said internal combustion engine is part of a/vehicle, land/and said alternator is connected to charge boat or building equipment a battery associated with said vehicle.

7. An electrical generating apparatus according to any preceding claim further comprising switch means to disconnect one phase output of the transformer from the rectifier when an appliance connected to said DC or AC output is initially switched on and for connecting the one phase to the rectifier after the appliance is switched on.

8. A method for obtaining an electrical supply from the output of a polyphase alternator driven by an internal combustion engine wherein the voltage of said electrical supply is higher than that of the output of the polyphase alternator comprising providing a step up polyphase transformer having its number of phases corresponding to the number of phases of the alternator, and connecting each phase input of the transformer to a phase output of the alternator, and rectifying the output of the polyphase transformer to provide a DC output.

9. A method according to claim 8, further comprising converting said DC output to provide an AC electrical supply.

10. A method according to claim 8 or 9, wherein said alternator output is additionally rectified to charge a battery.

11. A method according to claim 10, wherein the field winding of said alternator is excited by said battery and controlled by a voltage regulator, whereby said DC output is of substantially constant voltage.

12. A method according to claim 10 or 11, wherein said field winding is excited by said battery and is controlled by an overload cutout, said cutout disconnecting said field winding in response to excess load across the output of the alternator.

13. A method according to any of claims 8 to 12, wherein said internal combustion engine is part of a land vehicle, boat or building equipment and said alternator is connected to charge a battery associated with said vehicle.

14. A method according to any of claims 8 to 13, further comprising providing switch means to disconnect one phase output of the transformer from the rectifier when an appliance connected to said DC or AC output is initially switched on and for connecting the one phase to the rectifier after the appliance has been switched on.

0016559

**European Patent Office**

## EUROPEAN SEARCH REPORT

Application number

EP 80 30 0580

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | <u>US - A - 3 316 416</u> (R.A. CARLSON)<br>  * Whole patent *<br>   --- | 1,3,4,<br>6,8,<br>10,11,<br>13 | H 02 J  7/14<br>         7/16<br>B 60 R  16/02 |
| | <u>DE - B - 1 290 822</u> (PLESSEY COM-<br>PANY)<br>  * Column 2, line 21 - column 4,<br>   line 4; figure *<br>   --- | 1,2,8,<br>9 | |
| | <u>GB - A - 917 540</u> (ROBERT BOSCH)<br>  * Page 1, line 62 - page 2, line<br>   43; page 3, line 112 - page 4,<br>   line 4; figure *<br>   --- | 3,4,5,<br>10-12 | TECHNICAL FIELDS SEARCHED (Int.Cl. 3)<br><br>H 02 J  7/14<br>         7/16<br>         7/24<br>B 60 R  16/04<br>         16/02<br>B 60 Q  1/00 |
| A | <u>DE - B - 1 194 487</u> (PINTSCH BAMAG)<br>  * Column 3, line 39 - column 4,<br>   line 16; figures 1,2 *<br>   --- | 1,3,4,<br>8,10,<br>11 | |
| A | <u>GB - A - 1 047 303</u> (J. STONE & CO.)<br>  * Page 1, line 63 - page 2, line<br>   12 and lines 57-66; figures 1,<br>   3 *<br>   ----- | 1,3,8,<br>10 | |

CATEGORY OF CITED DOCUMENTS

X: particularly relevant
A: technological background
O: non-written disclosure
P: intermediate document
T: theory or principle underlying
   the invention
E: conflicting application
D: document cited in the
   application
L: citation for other reasons

&: member of the same patent
family,
corresponding document

| X | The present search report has been drawn up for all claims | |
|---|---|---|
| **Place of search**<br>The Hague | **Date of completion of the search**<br>09-06-1980 | **Examiner**<br>POINT |

EPO Form 1503.1  06.78